# EUROPÄISCHE PATENTSCHRIFT

(11) **EP 1 062 777 B1**
(45) Veröffentlichungstag und Bekanntmachung des Hinweises auf die Patenterteilung: **11.08.2004**
(21) Anmeldenummer: 99913184.0
(22) Anmeldetag: 23.02.1999
(51) Int. Cl.: H04L 12/44, H04L 12/26

(54) **DATENBUS FÜR MEHRERE TEILNEHMER**
DATA BUS FOR A PLURALITY OF NODES
BUS DE DONNEES POUR PLUSIEURS NOEUDS

(30) Priorität: 10.03.1998 DE 19810289
(43) Veröffentlichungstag der Anmeldung: 27.12.2000
(73) Patentinhaber: Bayerische Motoren Werke Aktiengesellschaft, 80809 München (DE)
(72) Erfinder: PELLER, Martin, D-82256 Fürstenfeldbruck (DE); BERWANGER, Josef, D-85586 Poing (DE); GRIESSBACH, Robert, D-83629 Weyarn (DE); SMUK, Karel, D-85301 Schweitenkirchen (DE)
(74) Vertreter: Wesel-Mair, Julia
(86) Internationale Anmeldenummer: PCT/EP1999/001164
(87) Internationale Veröffentlichungsnummer: WO 1999/046893

(56) Entgegenhaltungen:
- DE-A- 3 613 183
- H. TOMINAGA ET AL.: "A NETWORK ARCHITECTURE WITH DISTRIBUTED SWITCHING FUNCTION FOR OPTICAL FIBER LINKS" PROCEEDINGS COMPUTER NETWORKS COMPCON 82 FALL, 20. - 23. September 1982, Seiten 478-483, XP002107869 WASHINGTON US

## Beschreibung

Die Erfindung bezieht sich auf einen Datenbus für mehrere Teilnehmer, die über einen Stemkoppler miteinander verbunden sind. Ein derartiger Datenbus ist aus der nicht vorveröffentlichten deutschen Patentanmeldung DE 197 20 401 A1 bekannt. Dabei sind die Teilnehmer über Sende-/Empfangsmodule am Datenbus angeschlossen. Insbesondere dann, wenn Teilnehmer am Datenbus angeschlossen sind, die ein optisches Datentelegramm aufgeben, kann es zur Fehlfunktion eines Busteilnehmers (z.B. ständiges Senden von Telegrammen) oder einem Fehler in einem Sende/Empfangsmodul (z.B. wenn der Ausgang eines im Sende-/Empfangsmodul eingesetzten optisch/elektrischen Wandlers auch außerhalb des Signalverkehrs auf dem eigentlich nur bei Signalverkehr auftretenden Low-Pegel bleibt) die Buskommunikation blockiert. Die Fehlerquelle kann in diesem Fall nicht automatisch ermittelt werden. Es ist auch nicht möglich automatisch einzugreifen. Die Buskommunikation bleibt bis zur Reparatur gestört.

Der Erfindung liegt die Aufgabe zugrunde, einen Datenbus der eingangs genannten Art zu schaffen, der die Möglichkeit bietet, den Datenverkehr auf dem Datenbus zu überwachen und insbesondere bei Auftreten einer Störung die Identifizierung eines Störers ermöglicht.

Die Erfindung löst diese Aufgabe mit den Mitteln des Patentanspruchs 1.

Diese Lösung besteht aus einer Reihe von Einzelmaßnahmen, die in Kombination die gewünschte Wirkung zeigen. Zum einen werden ggf. auftretende optische Signale in elektrische Form umgewandelt und als Eingangssignale dem Stemkoppler in elektrischer Form zugeführt. Der Sternkoppler selbst enthält ein logisches Entscheidungsglied, auf das die Eingangssignale geführt sind und dessen Ausgang über eine elektrische Leitung parallel an den Eingängen der Teilnehmer angeschlossen ist.

Im Gegensatz dazu ist bei einem Datenbus, wie er aus dem Artikel _{"}A Network Architecture with Distributed Switching Function for Optical Fiber Links", Proceedings Computer Networks Compcon 82 Fall, 10.-23. September 1982, p.478-483, XP002107869, bekannt ist, gerade bei einer Vielzahl von Teilnehmern der Leistungsbedarf abhängig von der Zahl der Teilnehmer hoch, da dieser Datenbus physikalisch ein derartiges integriertes Entscheidungsglied nicht enthält. Bei diesem Datenbus ist jeder Teilnehmer mit seinem Ausgang an den Eingängen aller anderen Teilnehmer angeschlossen mit der Folge eines hohen Ausgangsleistungsbedarts jedes Teilnehmers gerade bei einer Vielzahl von Teilnehmern, da dieser Bedarf mit der Zahl der Teilnehmer steigt. Im Gegensatz dazu ist bei der Erfindung der Leistungsbedarf innerhalb des Sternkopplers unabhängig von der Zahl der Teilnehmer und aufgrund der Verwendung eines physikalischen Entscheidungsgliedes gering.

Beim erfindungsgemäßen Datenbus ist ferner jedem Eingang des Entscheidungsglieds ein Speicherglied parallel geschaltet, das bei Auftreten eines Eingangssignals an diesem Eingang bleibend seinen Zustand ändert. Dadurch wird es möglich, den jeweils sendenden Teilnehmer auch nach der Beendigung des Sendebetriebs zu identifizieren. Dies ist besonders dann von Bedeutung, wenn es sich um einen Störer handelt. Im Gegensatz dazu wird bei einem Datenbus, wie er aus der DE 36 13 183 bekannt ist, mit Hilfe einer Torschaltung für jeden Teilnehmer der Sendebetrieb ermöglicht und nach Beendigung des Sendebetriebs der Teilnehmmer wieder vom Bus angekoppelt. Eine irgendwie geartete Erkennung des Sendebetriebs des jeweils sendenden Teilnehmers gerade nach dem Sendeende wird dadurch nicht möglich.

Eine vorteilhafte Ausgestaltung der Erfindung ist im Patentanspruch 2 angegeben. Durch die Adressierbarkeit des Speicherglieds ist auf einfache Weise möglich zu erkennen, welche(r) Teilnehmer am Busverkehr beteiligt war(en) oder an welchem Eingang ein Fehler vorliegt. Hierzu kann beispielsweise der Zustand des Speicherglieds über eine serielle Schnittstelle (z.B. SPI) durch einen dem Stemkoppler zugeordneten Microcontroller ausgelesen werden. Kommt es während einer Telegrammübertragung zu einer Störung, kann so der _{"}Verursacher" der Störung ermittelt werden.

Schließlich kann das Speicherglied beispielsweise nach einer fehlerfreien Übertragung oder aber auch nach dem Auslesen durch den Mikrocontroller zurückgesetzt werden. Ein anschließend auftretender Fehler kann erkannt und vom vorhergehenden Fehler unterschieden werden.

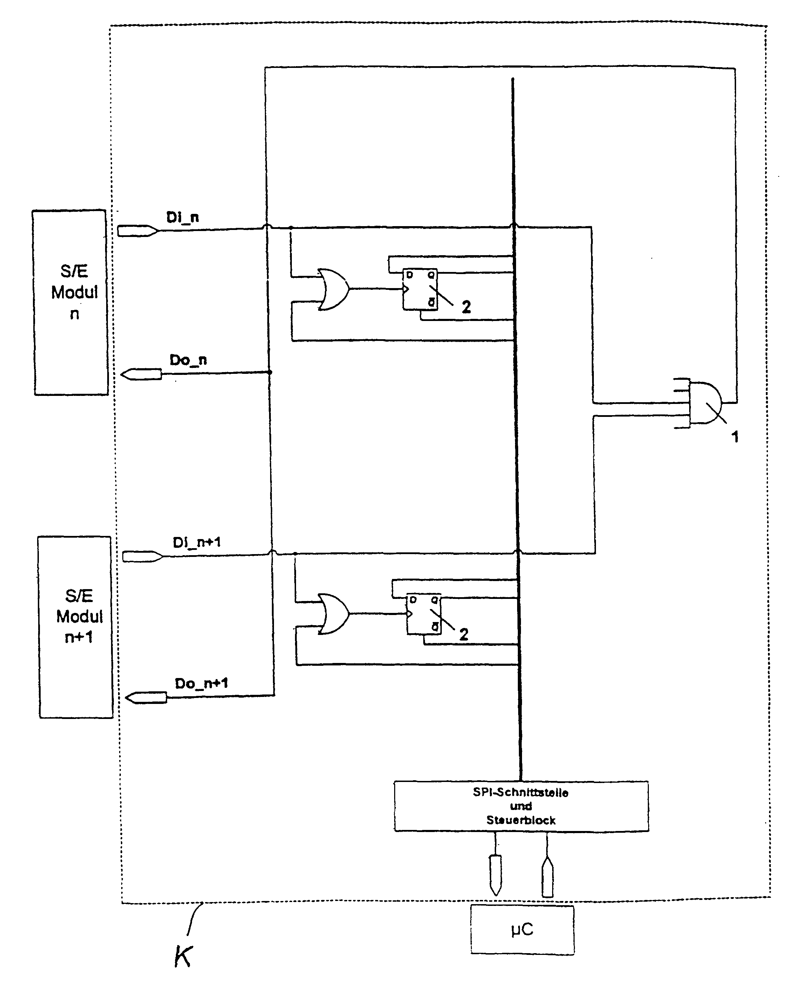

Anhand der einzigen Figur ist die Erfindung weiter erläutert. Darin ist ausschnittsweise ein erfindungsgemäßer Datenbus dargestellt, bei dem der Sendebetrieb der Teilnehmer überwacht wird.

An einem Datenbus D sind hier dargestellt zwei Teilnehmer Tₙ und Tₙ₊₁ über S/E (Sende/Empfangs-) Module S/Eₙ und S/Eₙ₊₁ angeschlossen. Die Module S/Eₙ und S/Eₙ₊₁ wandeln von den Teilnehmern Tₙ und Tₙ₊₁ kommende optische Telegramme in elektrische Form um und geben diese Signale Diₙ, Diₙ₊₁ als Eingangssignale auf ein logisches Entscheidungsglied (UND-Gatter 1) als zentraler Bestandteil eines Stemkopplers K weiter. Die Zahl der Ein- und Ausgänge des UND-Gatter 1 entspricht der Anzahl der Busteilnehmer. Der Ausgang des UND-Gatters treibt alle Eingänge (Doₙ, Doₙ₊₁) der Module S/Eₙ und S/Eₙ₊₁. Diese wandeln diese elektrischen Signale in optische Signale um und übertragen diese optischen Signale über nicht dargestellte optische Übertragungstrecken zu den Teilnehmern Tₙ und Tₙ₊₁.

Jedem Busteilnehmer-Eingang am Sternkoppler K ist eine Registerzelle 2 zugeordnet, die einen Low-Pegel an dem betreffenden Eingang erfaßt. Wenn der an diesem Eingang angeschlossene Busteilnehmer als Signalquelle (Sender) dient oder dauerhaft ein Low-Pegel anliegt, wird der Zustand gespeichert und kann über eine serielle Schnittstelle (z.B. SPI) von einem Microcontroller uC ausgelesen werden. Damit kann erkannt werden, welche(r) Teilnehmer am Busverkehr beteiligt war(en) oder an welchem Eingang ein Fehler vorliegt. Kommt es während einer Telegrammübertragung zu einer Störung, kann so der _{"}Verursacher" der Störung ermittelt werden. Nach einer fehlerfreien Übertragung wird das Register automatisch zurückgesetzt

## Patentansprüche

1. Datenbus für mehrere Teilnehmer, die über einen Sternkoppler (K) miteinander verbunden sind, **dadurch gekennzeichnet, dass**
die Eingangssignale (Di_n, Di_n+1) des Sternkopplers in elektrischer Form vorliegen, dass der Sternkoppler ein logisches Entscheidungsglied (1) enthält, an dessen Eingänge die Ausgänge der Teilnehmer angeschlossen sind und auf das die Eingangssignale geführt sind, dass der Ausgang des Entscheidungsglieds über eine im Stemkoppler enthaltene elektrische Leitung parallel an den Eingängen der Teilnehmer angeschlossen ist, dass zumindest ein Teil der Teilnehmer über eine optische Übertragungstrecke mit nach- bzw. vor-geschaltetem opto-elektrischen Wandlern (S/E Modul n, S/E Modul n+1) am Sternkoppler angeschlossen ist und dass jedem Eingang des Sternkopplers (K) ein Speicherglied (2) parallel geschaltet ist, das bei Auftreten eines Eingangssignals an diesem Eingang seinen Zustand ändert.

2. Datenbus nach Anspruch 1, **dadurch gekennzeichnet, dass** das Speicherglied adressierbar ist.

3. Datenbus nach Anspruch 1 oder 2, **dadurch gekennzeichnet, dass** der Zustand des Speicherglieds auslesbar ist.

4. Datenbus nach einem der Ansprüche 1 bis 3, **dadurch gekennzeichnet, dass** das Speicherglied rücksetzbar ist.

## Claims

1. A data bus for a plurality of nodes which are connected to one another via a star coupler (K), **characterised in that** the input signals (Di_n, Di_n+1) of the star coupler are present in electrical form, **in that** the star coupler contains a logic decision element (1), to the inputs of which the outputs of the nodes are connected and to which the input signals are guided, **in that** the output of the decision element is connected in parallel to the inputs of the nodes via an electric line contained in the star coupler, **in that** at least some of the nodes are connected to the star coupler via an optical transmission segment with downstream or upstream opto-electrical converters (S/E module n, S/E module n+1) and that connected in parallel to each input of the star coupler (K) is a memory element (2) which changes its state when an input signal occurs at this input.

2. A data bus according to claim 1, **characterised in that** the memory element is addressable.

3. A data bus according to claim 1 or 2, **characterised in that** the state of the memory element can be read out.

4. A data bus according to any one of claims 1 to 3, **characterised in that** the memory element can be reset.

## Revendications

1. Bus de données pour plusieurs noeuds qui sont reliés les uns aux autres par un coupleur en étoile (K),
**caractérisé en ce que**
les signaux d'entrée (Di_n, Di_n+1) du coupleur en étoile sont de forme électrique, le coupleur en étoile comprend un élément de décision logique (1) dont les entrées sont connectées aux sorties des noeuds et auquel sont amenés les signaux d'entrée, la sortie de l'élément de décision est connectée en parallèle aux entrées des noeuds via une ligne électrique incluse dans le coupleur en étoile, au moins une partie des noeuds est connectée au coupleur en étoile via un trajet de transmission optique avec des convertisseurs optiques/électriques placés en aval et/ou en amont (module E/R n, module E/R n+1), et une mémoire (2) qui modifie l'état d'un signal d'entrée à son arrivée sur cette entrée est branchée en parallèle à chaque entrée du coupleur en étoile (K).

2. Bus de données selon la revendication 1,
**caractérisé en ce que**
la mémoire est adressable.

3. Bus de données selon la revendication 1 ou 2,
**caractérisé en ce que**
l'état de la mémoire peut être sorti.

4. Bus de données selon l'une quelconque des revendications 1 à 3,
**caractérisé en ce que**
la mémoire peut être remise à zéro.
